# EUROPEAN PATENT SPECIFICATION

(11) **EP 4 024 105 B1**
(45) Date of publication and mention of the grant of the patent: **09.09.2026**
(21) Application number: 19943044.8
(22) Date of filing: 19.12.2019
(51) Int. Cl.: G02B 6/44

(54) **FULL-DRY MICROBEAM OPTICAL CABLE**
VOLLTROCKENES OPTISCHES MIKROSTRAHLKABEL
CÂBLE OPTIQUE À MICROFAISCEAU À SEC COMPLET

(30) Priority: 30.08.2019 CN 201910816804
(43) Date of publication of application: 06.07.2022
(73) Proprietor: Jiangsu Zhongtian Technology Co., Ltd., Nantong, Jiangsu 226463 (CN); ZTT Morocco Co., Ltd., Commune Jouamaa, Province Fahs-Anjra (MA)
(72) Inventor: WANG, Chenshi, Nantong, Jiangsu 226463 (CN); LI, Xinjian, Nantong, Jiangsu 226009 (CN); MIAO, Weiwei, Nantong, Jiangsu 226463 (CN); LU, Jie, Nantong, Jiangsu 226463 (CN); ZHOU, Hua, Nantong, Jiangsu 226463 (CN); LI, Qiang, Nantong, Jiangsu 226009 (CN)
(74) Representative: Zaboliene, Reda
(86) International application number: PCT/CN2019/126737
(87) International publication number: WO 2021/036110

(56) References cited:
- EP-A1- 2 163 927
- CN-A- 103 487 906
- CN-A- 104 570 251
- CN-A- 110 426 803
- CN-A- 110 515 168
- CN-U- 208 283 608
- CN-U- 208 921 918
- US-A1- 2008 304 798
- US-A1- 2018 203 198
- US-B2- 7 801 404

## Description

The disclosure relates to a technical field of all dry micro beam optical cable having a plurality of easy-stripping dry-type optical fiber micro tubes.

### BACKGROUND

Optical fibers and a sheath are the basic elements of an optical cable, and there is usually a protective layer or protective tube positioned outside the optical fiber, which may be tight sleeve layer, semi tight sleeve layer, or loose tube. Tight sleeve optical fiber is a basic element for manufacturing various indoor optical cables, and the tight sleeve optical can be used alone, for making pigtails, connecting various active or passive components, and connecting instruments and terminal equipment. In the outdoor optical cable, the loose tube is usually molded on an outer sleeve of the optical fiber, to protect the optical fiber from internal stress and external lateral pressure. Material of the loose tube is usually polybutylene terephthalate (PBT), polycarbonate (PC) or polypropylene (PP). Shore hardness H_{D} of loose tube material is usually greater than 70, and belongs to medium hard plastic.

The tight sleeve layer and loose tube of the tight sleeve optical fiber can only be stripped with special tools. When stripping the tight sleeve layer or loose tube, it is easy to cause damage to a coating layer of the optical fiber. Moreover, the loose tube is relatively rigid, and it is easy to bend the loose tube where the bending radius is small, resulting in excessive attenuation and even fiber breakage. The loose tube shrinks in an optical cable connector box, which tends to increase the attenuation of the optical fiber. The loose tube is usually provided with liquid lubricant. This lubricant mainly includes silicone oil. Silicone oil is a general chemical compound with low natural degradation, and is a pollutant in the environment for a long time. In the process of optical cable installation and use, cleaning the lubricant is difficult, needing to be treated with organic solvent, and the organic solvent itself is not environmentally friendly and inefficient. Contact between the oil and the optical fiber causes a coloring layer of the optical fiber to decay, making it difficult to distinguish between optical fibers, resulting in haphazard connection of optical fiber. When the temperature changes, viscosity of the oil may change, which may lead to higher optical fiber attenuation.

Documents US 2018/203198 A1, CN 104 570 251 A and US 2008/304798 A1 reflect the state of the art.

### SUMMARY

In view of the above, it is necessary to provide an all-dry micro beam optical cable having a plurality of easy-stripping dry-type optical fiber micro tubes.

The technical solution in this disclosure is provided by an all-dry microbeam optical cable in accordance with claim 1. Preferred embodiments are defined in dependent claims 2-12.

Compared with the prior art, the microtubule sheath of the optical fiber micro tube of the present disclosure adopts combined material of the polyolefin and inorganic filler, which can be peeled away by hand without the help of tools. The microtubule sheath is soft and bend-tolerant. When the microtubule sheath is removed, the coating layer of the optical fiber will not be damaged. The optical fiber micro tube does not contain a filling of oil, and the construction is efficient and convenient. The components in the optical fiber micro tube have high compatibility, and the long-term use will not lead to decay of the optical fiber coloring layer or attenuation.

### BRIEF DESCRIPTION OF DRAWINGS

A better understanding will be obtained by reference to the following detailed description and the accompanying drawings.
FIG. 1 is a schematic cross-sectional view of an easy-stripping dry-type optical fiber micro tube in an embodiment not encompassed by the wording of the claims but considered useful for understanding the invention.
FIG. 2 is a schematic cross-sectional view of a first structure of an all-dry type micro beam optical cable having the easy-stripping dry-type optical fiber micro tube of FIG. 1.
FIG. 3 is a schematic cross-sectional view of a second structure of an all-dry type micro beam optical cable having the easy-stripping dry-type optical fiber micro tube of FIG. 1.
FIG. 4 is a schematic cross-sectional view of a third structure of an all-dry type micro beam optical cable having the easy-stripping dry-type optical fiber micro tube of FIG. 1.
Fig. 5 is a schematic cross-sectional view of a fourth structure of an all-dry type micro beam optical cable having the easy-stripping dry-type optical fiber micro tube of FIG. 1.
Fig. 6 is a schematic cross-sectional view of a fifth structure of an all-dry type micro beam optical cable having the easy-stripping dry-type optical fiber micro tube of FIG. 1.
FIG. 7 is a schematic cross-sectional view of a sixth structure of an all-dry type micro beam optical cable having the easy-stripping dry-type optical fiber micro tube of FIG. 1.

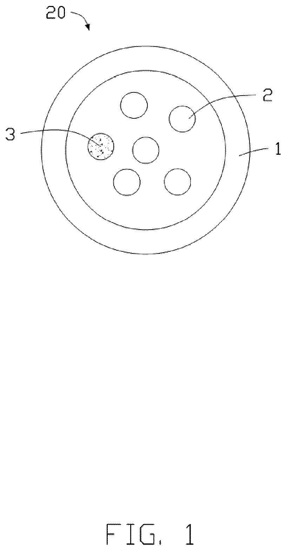

Note that the first to fifth embodiments and the structures of figures 1-5 are not encompassed by the wording of the claims but are considered useful for understanding the invention.

### DESCRIPTION OF MAIN COMPONENTS OR ELEMENTS

Main components and reference numbers thereof:
Microtubule sheath 1;
Optical fiber 2;
Dry-type optical fiber micro tube 20;
Water blocking yarn 3;
All-dry type micro beam optical cable 100;
Outer sheath 30;
Reinforcing member 31;
Water blocking tape 40;
Rip cord 41;
Reinforcing layer 50;
Winding tape 80;
Winding microtubule 82;
Microtubule core 84.

The following specific embodiments will further explain the embodiments of the disclosure in combination with the drawings.

### DETAILED DESCRIPTION

The present disclosure is described in combination with the accompanying drawings and specific embodiments.

Many specific details are described in the following description to facilitate a full understanding of the embodiments of the present disclosure. Note that the first to fifth embodiments and the structures of figures 1-5 are not encompassed by the wording of the claims but are considered useful for understanding the invention.

In the description, "SZ twisting" is twisting to the left and the right. Twisting direction of a twisting system can be divided into left-hand twist and right-hand twist. Shape of twisting in left direction is similar to "S", also called as S direction, and shape of twisting in right direction is similar to "Z", also called as Z direction.

Unless otherwise defined, all technical and scientific terms used herein have the same meanings generally understood by those skilled in the technical field belonging to the embodiments of the present disclosure. The terms used in the description of the present disclosure herein are only for the purpose of describing specific embodiments, and are not intended to limit embodiments of the present disclosure.

Referring to Fig. 1, the present disclosure discloses an easy-stripping dry-type optical fiber micro tube 20, includes a plurality of optical fibers 2, a plurality of water blocking yarns 3, and microtubule sheath 1. The microtubule sheath 1 wraps the optical fibers 2 and the water blocking yarns 3. There is no filler in gaps between an inner cavity of the microtubule sheath 1 and the optical fibers 2 and / or several water blocking yarns 3. The water blocking yarns accounts for 20% or less of the inner cavity space. That is, there is no oil filling in the microtubule sheath, decay of the coloring layer may be avoided, making connections of the optical fibers easier, environmentally friendly, and efficient.

The optical fiber 2 is substantially a single-mode optical fiber, and a protective coating is on a surface of the optical fiber. When a plurality of optical fibers 2 appear in each microtubule sheath 1, the optical fibers can be distinguished by coloring, that is, colored optical fibers are formed. The diameter of the single optical fiber 2 may be nominal 250µm, 200µm, or 180µm. The optical fibers 2 are substantially twisted in SZ shape in the microtubule sheath 1. The equivalent diameter formula of the plurality of optical fibers is: D=1.16×n^{1/2}×d. Wherein, n is the quantity of optical fibers, and D is the diameter of colored optical fibers.

The dry-type optical fiber micro tube 20 includes at least one water blocking yarn 3. A density of the water resistant yarn is substantially 200-800 Denier (also known as Denier number), a tensile strength ≥ 12N, an elongation at break ≥ 12%, a thermal shrinkage ≤ 3.5%, an expansion speed rate ≥ 25ml / g / min, an expansion rate ≥ 30ml / g, and a moisture content ≤ 8%. The water blocking yarn 3 is prepared from water absorbent resin or water absorbent fiber after process curing on the basic yarn. There is no loss of water blocking powder during the production of optical fiber micro tube, wherein water absorbent resin and water absorbent fiber substantially contain acrylic acid, polyacrylic acid, acrylate, or their modifications or their mixtures, wherein the modified substances can be acrylic acid graft copolymers, such as acrylic acid graft modified polyethylene terephthalate. The water blocking yarn 3 accounts for 20% or less of the size of the inner cavity of the microtubule sheath.

A thickness of the microtubule sheath 1 on the dry-type optical fiber micro tube 20 is 0.1-0.2mm. The material of the microtubule sheath 1 includes an olefin polymer and an inorganic filler. The inorganic filler accounts for 0.1% ~ 20% of the total mass of all components of the microtubule sheath. The olefin polymer includes a first olefin polymer or a copolymer of ethylene / propylene and other monomers, wherein the first olefin polymer includes one of linear low density polyethylene, poly-4-methyl-1-pentene, or ethylene propylene copolymer. The copolymer of ethylene / propylene and other monomers includes one or more mixtures of ethylene alkyd ethylene copolymer, ethylene methyl acrylate copolymer, and ethylene butyl acrylate copolymer. The Shore hardness H_{A} of the microtubule sheath is less than or equal to 90. The microtubule sheath 1 can be easily torn off by hand for at least 1m. The inorganic filler can be hydroxide, hydrated oxide, metal salt or their mixture, wherein the hydroxide can include aluminum hydroxide and magnesium hydroxide, the hydrated oxide can be hydrated alumina and hydrated magnesium carbonate, and the metal salt can be zinc oxide, calcium carbonate, cobalt oxide, etc. The inorganic filler can also be carbon black, silica, kaolin, clay, etc. A ratio of the equivalent circumference diameter of the optical fiber to the inner diameter of the microtubule sheath is X, 70% ≤ x < 90%, preferably 70-80%. The inorganic filler reduces the toughness of the material, so that the microtubule sheath can be easily torn away for at least 1m without tools. Furthermore, the addition of inorganic filler can reduce the shrinkage of the material. The above range of proportions controls the shrinkage of the material to be < 3%. The optical fiber micro tube will not shrink in a joint box, so that the stability of the optical cable connections can be ensured.

Structure and performances of the easy-stripping dry-type optical fiber micro tube 20 are illustrated in following embodiments.

### First embodiment

In the first embodiment, quantity of optical fibers in each micro tube 20 is 6, as shown in FIG. 1.

There are 6 optical fibers in each optical fiber micro tube 20. The colors of optical fibers 2 are blue, orange, green, brown, gray, and white. Type of the optical fiber is G.652D optical fiber, and the diameter of the optical fiber after coloring is 250µm±150µm. The optical fibers in the micro tube are twisted in SZ shape.

Each optical fiber micro tube 20 includes a 300D water blocking yarn 3, and a linear density of the water blocking yarn 3 is 30000 m / kg. Performance selection requirements of the water blocking yarn are: tensile strength ≥ 12N, elongation at break ≥ 12%, thermal shrinkage ≤ 3.5%, expansion speed rate ≥ 25ml / g / min, expansion rate ≥ 30ml / g, and water content rate ≤ 8%. In the first embodiment, the water blocking yarn is a water absorbent fiber containing acrylate, and a matrix of the water absorbent fiber containing acrylate is mainly polyester or nylon.

A thickness of the microtubule sheath 1 is 0.1mm, the material of microtubule sheath 1 is a mixture of linear low density polyethylene, carbon black, and silica, and a mass ratio is 82:10:8. A density of the microtubule sheath is 1.4 ~ 1.5 g/cm³, a tensile strength of the microtubule sheath is 12MPa, and an elongation at breakpoint of the microtubule sheath is 140%. The Shore hardness H_{A} of the microtubule sheath material is 84, and the microtubule sheath can be easily torn off by hand for 1m distance.

An outer diameter of the 6-core optical fiber micro tube is 1.2 + 0.1mm, the equivalent circumference diameter of the optical fibers accounts for 70-80% of the inner diameter of the microtubule sheath, and the water blocking yarn accounts for 10-15% of the size of the inner cavity of the microtubule sheath.

### Second embodiment

In the second embodiment, quantity of optical fiber in a micro tube 20 is 12.

Each micro tube 20 includes twelve optical fibers 2. Colors of the optical fibers 2 are blue, orange, green, brown, gray, white, red, black, yellow, purple, pink, and cyan. Type of the optical fibers is G.657A2 optical fiber, and diameter of the optical fiber after coloring is 200µm±10µm. The optical fibers are twisted in SZ shape in the micro tube 20.

Each micro tube 20 includes one water blocking yarn 3 with type of 300D. A linear density of the water blocking yarn 3 is 30000 m / kg, and performance selection requirements of the water blocking yarn 3 comprises: tensile strength ≥ 12N, elongation at break ≥ 12%, thermal shrinkage ≤ 3.5%, expansion speed rate ≥ 25ml / g / min, expansion rate ≥ 30ml / g, and water content ≤ 8%. In the second embodiment, the water blocking yarn is a water absorbent fiber cured with polyacrylic acid and acrylate, and a matrix of the water blocking yarn is mainly polyester or nylon.

In the second embodiment, a thickness of the microtubule sheath 1 is 0.15mm, the material of microtubule sheath 1 is a mixture of ethylene alkyd ethylene copolymer and aluminum hydroxide, and the mass ratio of the mixture is 95:5. A density of the microtubule sheath 1 is substantially 1.4 ~ 1.5 g/cm³, a tensile strength of the microtubule sheath 1 is substantially 12MPa, and an elongation at break of the microtubule sheath 1 is 140%. The Shore hardness H_{A} of the material of microtubule sheath 1 is 84, and the microtubule sheath 1 can be easily torn off by hand for 1m distance.

An outer diameter of the 12 cores optical fiber micro tube 20 is approximately 1.3 ± 0.1mm, an equivalent circumference diameter of the optical fiber accounts for 70-80% of the inner diameter of the microtubule sheath, and the water blocking yarn accounts for 12-18% of the size of the inner cavity of the microtubule sheath.

### Third embodiment

The third embodiment discloses an easy-stripping dry-type optical fiber micro tube 20 containing 12 optical fibers.

Each micro tube 20 includes 12 optical fibers 2. Colors of the optical fibers 2 are blue, orange, green, brown, gray, white, red, black, yellow, purple, pink and cyan. Type of the optical fiber 2 is G.657A2 optical fiber. A diameter of the optical fiber after coloring is 250µm±10µm. The optical fibers 2 are SZ twisted in the microtubule sheath 1.

Each micro tube 20 has one water blocking yarn 3 with type of 600D. A density of the water blocking yarn 3 is 15000m / kg. Performance selection requirements of the water blocking yarn 3 includes: tensile strength ≥ 20N, elongation at break ≥ 12%, thermal shrinkage ≤ 3.5%, expansion speed rate ≥ 30ml / *g* / min, expansion rate ≥ 40ml / g, and water content ≤ 8%. In the third embodiment, the water blocking yarn is a water absorbent fiber containing acrylic acid graft copolymer, and a matrix of the water blocking yarn is mainly polyester or nylon.

A thickness of microtubule sheath 1 is 0.2mm, the material of microtubule sheath 1 is a mixture of ethylene methyl acrylate copolymer, ethylene butyl acrylate copolymer, and kaolin, the mass ratio of the mixture is 45:45:10. The density of the microtubule sheath is substantially 1.4 ~ 1.5 g/cm³, the tensile strength of the microtubule sheath is substantially 18MPa, and the elongation at breakpoint of the microtubule sheath is 210%. The Shore hardness H_{A} of the microtubule sheath material is 89, and the microtubule sheath 1 can be easily torn off by hand for 1m.

An outer diameter of the micro tube 20 with 12 fibers is approximately 1.5 ± 0.1mm, the equivalent circumference diameter of the optical fiber accounts for 70-80% of the inner diameter of the microtubule sheath, and the water blocking yarn accounts for 8-16% of the size of the inner cavity of the microtubule sheath.

Table 1 lists outer diameters and quantities of different optical fibers in the micro tubes 20 of the disclosure, and preferred outer diameters of optical fiber micro tubes.

**Table 1**

| | | | | | | | | |
|---|---|---|---|---|---|---|---|---|
| Outer diameter of the optical fiber (µm) | 250 | 250 | 250 | 250 | 200 | 200 | 200 | 200 |
| Quantity of the optical fiber | 4 | 6 | 12 | 24 | 4 | 6 | 12 | 24 |
| Outer diameter of the micro tube (mm) | 1.0 ±0.1 | 1.2 ±0.1 | 1.5 ±0. 1 | 2.2 ±0.1 | 0.9 ±0.1 | 1.1 ±0.1 | 1.3 ±0.1 | 1.8 ±0.1 |

The Shore hardness H_{A} of the microtubule sheath 1 in the micro tube 20 is not more than 90. The microtubule sheath can be torn off by hand without tools, the force for tearing off is small, and the optical fiber may remain undamaged. The minimum bending radius of the optical fiber micro tube is 10mm without losing roundness. There is no oil in the optical fiber micro tube 20, and the material of the water blocking material includes water blocking yarn, which is environmentally friendly and efficient during construction. The compatibility of optical fiber, water blocking yarn, and microtubule sheath in the optical fiber micro tube is high, and physical and chemical properties of the optical fiber over a long length are stable.

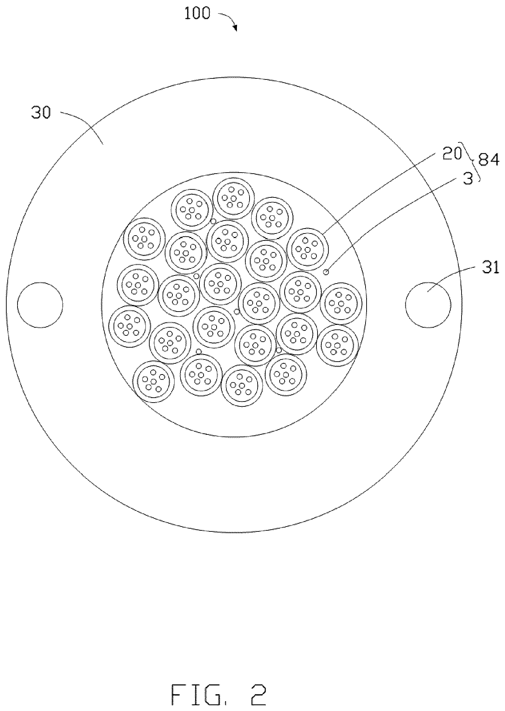

Referring to FIG. 2, FIG. 3 and FIG. 4, the present disclosure applies the micro tubes 20 to an optical cable structure to make an all-dry type micro beam optical cable 100. The optical cable is generally used for urban backbone network, which is substantially laid in outdoor pipeline or overhead.

In a specific embodiment, taking the micro tube 20 of the 6-core optical fiber 2 as an example, as shown in FIG. 2, the cross-sectional structure of the all-dry type micro beam optical cable 100 includes a plurality of micro tubes 20, a plurality of water blocking yarns 3, and an outer sheath 30. Each water blocking yarn 3 is in gaps between the plurality of micro tubes 20, and a plurality of reinforcing member 31 are embedded in the outer sheath 30. The micro tube is the easy-stripping dry-type optical fiber micro tube 20. Quantity of the micro tubes in one optical cable can be 3, 6, 9, 12, 15, 18, 21, 24 or 30, etc., depending on size and performance requirements of the optical cable. The micro tubes 20 are spirally twisted, twisted in SZ shape, or S shape in an inner cavity of the outer sheath 30 to form a microtubule core 84, which is arranged in a center of the optical cable. Performance of the water blocking yarn 3 meets or is higher than the industry standard specification of "YDT1115.2 - water blocking materials for communication cables Part 1: water blocking yarn". Material of the outer sheath 30 is polyolefin, substantially medium density polyethylene or high density polyethylene, or low smoke halogen-free flame retardant polyolefin. The reinforcing members 31 are substantially glass fiber reinforced plastic rods (FRP for short). A density of FRP is 2.05 ~ 2.15 g/cm³, tensile and bending strength of FRP is ≥ 1100MPa, tensile and bending elastic modulus FRP is ≥ 50GPa, elongation at break of FRP is ≤ 4%, water absorption of FRP is ≤ 0.1%, and FRP has a low coefficient of thermal expansion 5× 10⁻⁵-6× 10⁻⁵K⁻¹, acid- and alkali-resistant, and with stable chemical properties. In order to maintain an adhesion between FRP and the outer sheath, a layer of organic polymer is substantially coated on the surface of FRP. Main component of the layer of organic polymer is ethylene acrylic acid copolymer. A separation force between FRP and the outer sheath is ≥ 50N.

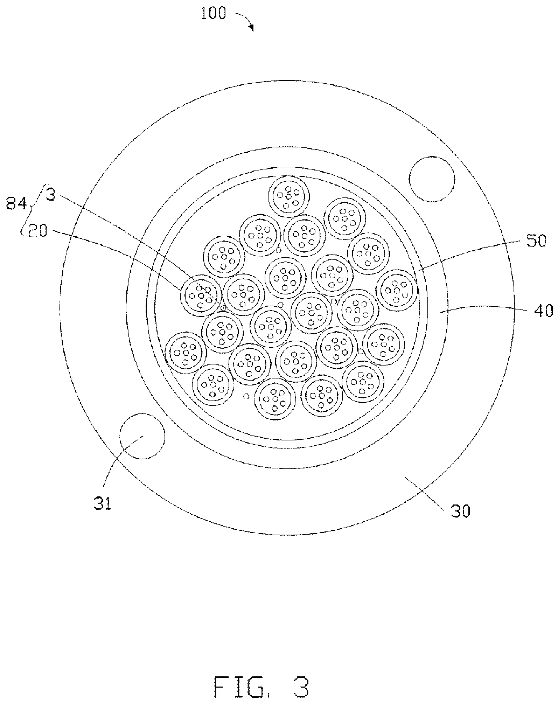

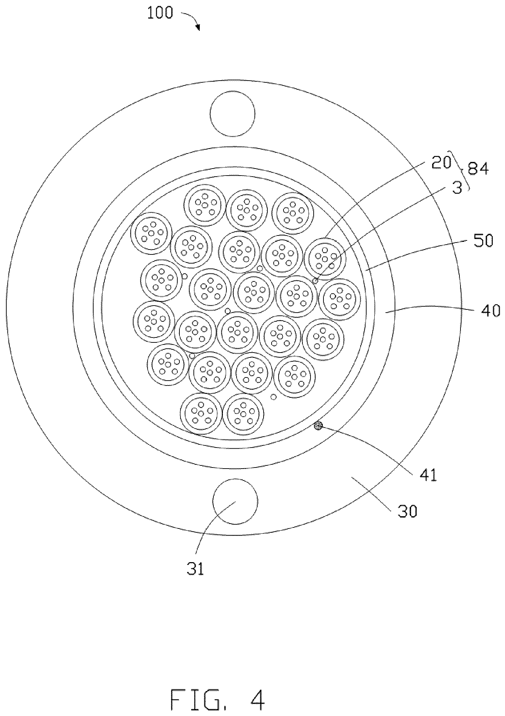

In the structure of the optical cable, a reinforcing layer 50 may also be arranged between the twisted plurality of optical fiber micro tubes (microtubule core 84) and the outer sheath 30 (as shown in FIG. 3 or FIG. 4). The reinforcing layer 50 is substantially coaxial with the outer sheath 30 and the microtubule core 84. The reinforcing layer 50 may include any one of aramid, glass fiber yarn, or polyester yarn, or may include any combination of aramid and water blocking yarn, glass fiber yarn, and water blocking yarn, or polyester yarn and water blocking yarn, or include a mixture thereof.

In the structure of the optical cable, a water blocking tape 40 (as shown in FIG. 3 and FIG. 4) may also be wrapped between the twisted plurality of optical fiber micro tubes (microtubule core 84) and the outer sheath 30. The water blocking tape 40 is substantially coaxial with the outer sheath 30 and microtubule core 84. The water blocking tape 40 is substantially a double-sided water blocking tape, which is composed of polyester fiber nonwovens, high water absorption and expansion materials, and polyester fiber nonwovens in turn. The high water absorption and expansion materials are substantially composed of cross-linked polyacrylate expansion powder, which is heat-resistant, acid-base free, and chemically stable. A thickness of the water blocking tape is ≤ 0.25mm, an expansion rate is ≥ 10mm / min, an expansion height is ≥ 12mm, a tensile strength is ≥ 40N / cm, and an elongation at break is ≥ 12%. In other embodiments, a rip cord 41 (as shown in FIG. 4) may be embedded in the water blocking tape 40. Material of the rip cord 41 may include aramid or polyester yarn, with linear density ≥ 333tex, tensile strength ≥ 150N, elongation at break ≥ 12%, softening point ≥ 238 °C, and melting point ≥ 265 °C.

In the structure of the all-dry type micro beam optical cable 100 shown in FIG. 4, the optical cable includes a microtubule core 84, a reinforcing layer 50, a water blocking tape 40, and an outer sheath 30 arranged substantially coaxially from a core layer to an outer layer, wherein there are 24 micro tubes 20 in the microtubule core 84, and gaps between the micro tubes 20 are randomly filled with 5 water blocking yarns 3. Each micro tube 20 includes five twisted optical fibers 2, one water blocking yarn 3, and a microtubule sheath 1 wrapped up the optical fibers and the water blocking yarn. One rip cord 41 is embedded in the water blocking tape 40, and two reinforcing members 31 are radially embedded in the outer sheath 30. When the quantity of the micro tubes 20 exceeds twelve, the micro tubes 20 can be distinguished by coloring, that is, by spraying different numbers of color blocks or color rings.

### Fourth embodiment

An all-dry type micro beam optical cable 100, number of optical fiber cores is 144, and structure of the optical cable is generally as shown in FIG. 4.
(1) Each micro tube 20 includes 6 optical fibers 2. Colors of the optical fiber 2 are blue, orange, green, brown, gray and white. Type of the optical fiber is G.652D optical fiber, and the diameter of optical fiber after coloring is 250µm±15µm. The optical fibers are twisted in SZ shape in the micro tube.
(2) Each micro tube 20 includes a 300D water blocking yarn 3. The linear density of water blocking yarn 3 is 30000m / kg, tensile strength ≥ 12N, elongation at break ≥ 12%, thermal shrinkage ≤ 3.5%, expansion speed rate ≥ 25ml / g / min, expansion rate ≥ 30ml / g and water content ≤ 8%.
(3) The thickness of microtubule sheath 1 is between 0.1-0.2mm. Material of the microtubule sheath I includes LSZH material, the density of the microtubule sheath is substantially 1.4 ~ 1.5 g/cm³, the tensile strength of the microtubule sheath is substantially 12MPa, and the elongation at breakpoint of the microtubule sheath is 140%.
(4) The outer diameter of the 6-cores optical fiber micro tube 20 is substantially 1.2 ± 0.1mm, the equivalent circumference diameter of the optical fiber accounts for 70-80% of the inner diameter of the microtubule sheath, and the water blocking yarn accounts for 8-16% of the inner cavity of the microtubule sheath.
(5) The micro tubes 20 are twisted in S shape in the inner cavity of the outer sheath 30.
(6) Colors of micro tubes 20 are blue, orange, green, brown, gray, white, red, black, yellow, purple, pink, cyan, blue with one black ring, orange with one black ring, green with one black ring, brown with one black ring, gray with one black ring, white with one black ring, red with one black ring, black with a white ring, yellow with one black ring, purple with one black ring, pink with one black ring, and cyan with one black ring.
(7) The reinforcing layer 50 includes aramid and water blocking yarn.
(8) The water blocking tape 40 is a double-sided water blocking tape. A thickness of the water blocking tape is 0.2mm, a width of the water blocking tape is 30mm, an expansion rate of the water blocking tape is ≥ 10mm 1 min, an expansion height of the water blocking tape is ≥ 12mm, a tensile strength of the water blocking tape is ≥ 40N 1 cm, and an elongation at breakpoint of the water blocking tape is ≥ 12%.
(9) Material of the rip cord 41 includes polyester yarn, with linear density of 444tex, tensile strength of ≥ 150N, elongation at break of ≥ 12%, softening point of ≥ 238 °C, melting point of ≥ 265 °C.
(10) Two FRP reinforcing members 31 are embedded in the outer sheath 30 in parallel, and the diameter of the reinforcing member 31 is 2.0±0.1 mm.
(11) Material of the outer sheath 30 includes high-density polyethylene, and the nominal thickness of the outer sheath is 2.8mm.
(12) The overall outer diameter of 144-cores all-dry type micro beam optical cable 100 is 16.6mm, and an optical fiber density in the inner cavity of the optical cable is 1.52 F/mm².

### Fifth embodiment

An all-dry type micro beam optical cable 100, number of cores of optical fiber is 144.
(1) Each micro tube 20 includes 12 optical fibers 2. Colors of the optical fibers 2 are blue, orange, green, brown, gray, white, red, black, yellow, purple, pink and cyan. Type of the optical fibers is G.657A2 optical fiber, and the diameter of the optical fiber after coloring is 200µm±10µm. The optical fibers 2 are twisted in SZ shape in the micro tube 20.
(2) Each micro tube 20 includes a 600D water blocking yarn 3. The density of the water blocking yarn is 15000m / kg, tensile strength of the water blocking yarn is ≥ 12N, elongation at break of the water blocking yarn is ≥ 12%, thermal shrinkage of the water blocking yarn is ≤ 3.5%, expansion speed rate of the water blocking yarn is ≥ *25ml* / g / min, expansion rate of the water blocking yarn is ≥ 30ml / g, and water content of the water blocking yarn is ≤ 8%.
(3) The thickness of microtubule sheath 1 is between 0.1-0.2mm. Material of the microtubule sheath 1 includes LSZH material, the density of the microtubule sheath is substantially 1.4 ~ 1.5 g/cm³, the tensile strength of the microtubule sheath is substantially 12MPa, and the elongation at break of the microtubule sheath is 140%.
(4) The outer diameter of the 12-cores micro tube 20 is substantially 1.4 ± 0.1mm, the equivalent circumferential diameter of the optical fiber accounts for 70-80% of the inner diameter of the micro tube, and the water blocking yarn accounts for 10-15% of the inner cavity of the microtubule sheath.
(5) The micro tubes 20 are spirally twisted in S shape in the inner cavity of the outer sheath 30.
(6) Colors of micro tubes 20 are blue, orange, green, brown, gray, white, red, black, yellow, purple, pink, cyan, blue with one black ring, orange with one black ring, green with one black ring, brown with one black ring, gray with one black ring, white with one black ring, red with one black ring, black with a white ring, yellow with one black ring, purple with one black ring, pink with one black ring, cyan with one black ring.
(7) The reinforcing layer 50 includes glass fiber yarn and water blocking yarn.
(8) The water blocking tape 40 is a double-sided water blocking tape, with a thickness of 0.2mm, a width of 34mm, an expansion rate of ≥ 10mm / min, an expansion height of ≥ 12mm, a tensile strength of ≥ 40N / cm, and an elongation at break of ≥ 12%.
(9) Material of the tearing rope 41 may include polyester yarn, with linear density of 444tex, tensile strength of ≥ 150N, elongation at breakpoint of ≥ 12%, softening point of ≥ 238 °C, and melting point of ≥ 265 °C.
(10) Two FRP reinforcing members 31 are embedded in the outer sheath 30 in parallel, and the diameter of the reinforcing member 31 is 1.8 ± 0.1mm.
(11) Material of the outer sheath 30 includes high-density polyethylene, and the thickness of the outer sheath 30 is 2.6mm.
(12) The outer diameter of the 288-cores all-dry type micro beam optical cable 100 is 15.1mm, and the optical fiber density in the inner cavity of the optical cable is 3.74 F/mm².

In order to improve the optical fiber density in the inner cavity of the optical cable 100 and increase the communication capacity, the present disclosure improves the optical cable structure based on the above. A plurality of micro tubes 20 are wound and combined by using winding tapes 80, and then the twisted microtubule core 84 is obtained. The winding tape 80 may include polyester yarn, aramid yarn, or polyester tape, or a combination thereof. A thickness of the winding tape 80 is substantially 0.1-0.2mm, and equivalent width of the winding tape 80 is substantially 0.1-2mm. Generally, 8-12 micro tubes 20 are combined into a bundle of winding microtubules 82 through the winding tape 80. Each bundle of winding microtubules 82 is distinguished by different colors of winding tape 80, and then twisted the winding microtubules together with the water blocking yarns to form a cable core (microtubule core 84). The present disclosure also calculates and optimizes the structure of the microtubule core 84 through the following optical fiber density formula, so as to effectively improve the optical fiber density and the space proportion of the optical fiber 2 in the inner cavity of the outer sheath.
$σ = N / \left(π\times {R}^{2}\right)$

In the above formula (1), σ is the optical fiber density, N is the quantity of the optical fibers, and R is the inner cavity radius of the optical cable. The optical fiber density in the inner cavity of the optical cable is substantially 3.8-10 F/mm², which is defined as the number of optical fibers in the optical cable divided by the internal diametric area of the inner cavity of the optical cable.
$R = \left(D+K\right) / 2$
Wherein: R is an inner cavity radius of the optical cable, D is an equivalent diameter of the optical cable core, K is a correction coefficient, and K is generally 0.5-1.0mm. The inner cavity radius of the optical cable is defined as half of the equivalent diameter of optical cable core with correction factor.
$D = {\left({M}_{1}\times {N}_{1}+{{D}_{1}}^{2}+{N}_{2}\times {0.43}^{2}\right)}^{1 / 2}$
Wherein: M₁is the thickness of the winding tape, N₁ is the number of winding tape, and N₂ is the equivalent number of water blocking yarns, which is a bus density specification of the water blocking yarns divided by 1420Denier, and D₁ is the equivalent diameter of the winding microtubule in the optical cable.
${D}_{1} = 1.16 \times {{N}_{3}}^{1 / 2} \times {D}_{2}$
Wherein: N₃is the number of micro tubes, and D₂ is the outer diameter of the micro tube.

According to formulas (1) ~ (4), the optical fiber density in the inner cavity of the optical cable of the present disclosure is:
$σ = \frac{4 N}{π {\left(\sqrt{{M}_{1} \times {N}_{1} + {1.16}^{2} {D}_{2}^{2} {N}_{3} + {0.43}^{2} {N}_{2}}+K\right)}^{2}}$

In the above formula (5), the unit of the optical fiber density is f / mm2; N is the number of optical fibers; K is the correction coefficient, taking the value of 0.5-1.0mm; M₁ is the thickness of the winding tape, with unit of mm; N₁ is the number of the winding tape; N₂ is the equivalent number of the water blocking yarns; N₃ is the number of dry-type optical fiber micro tubes; D₂ is the outer diameter of dry-type optical fiber micro tube, with unit of mm.

In structures of FIG. 2, FIG. 3, and FIG. 4, the optical fiber density in the inner cavity of the optical cable is:
$σ ′ = \frac{4 N}{π {\left(\sqrt{{1.16}^{2} {D}_{2}^{2} {N}_{3}}+2.5\right)}^{2}}$
Wherein: the unit of optical fiber density is f / mm2; N is the number of optical fibers; N₃ is the number of dry-type optical fiber micro tubes; 2 is the outer diameter of dry-type optical fiber micro tube, with unit of mm.

The following embodiments illustrate the utility of the present disclosure in improving the optical fiber density of the optical cable.

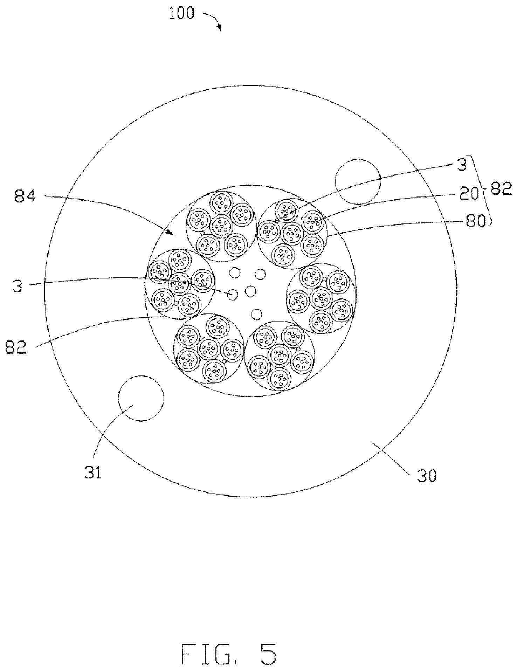

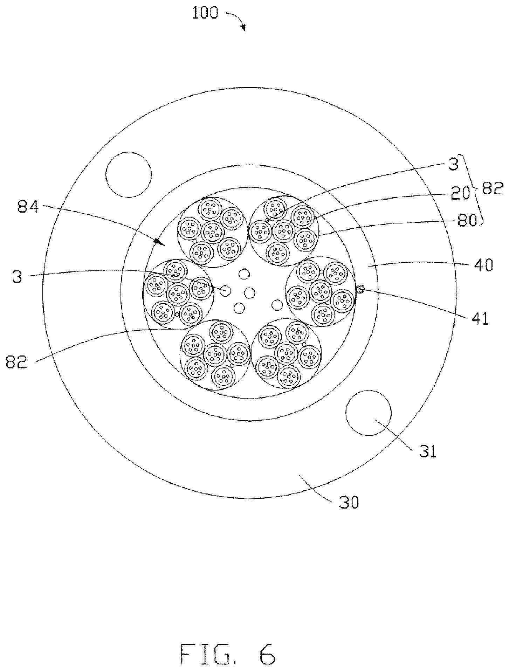

Referring to FIG. 5, FIG. 6, and FIG. 7, the structure of the optical cable 100 can be a micro tube that only includes a microtubule core 84 combined by a plurality of winding microtubules 82, a plurality of water blocking yarns 3, and an outer sheath 30. The plurality of the water blocking yarns 3 are filled in gaps between the winding microtubules 82. The winding microtubule 82 is composed of a plurality of micro tubes 20 wound by a winding tape 80 and a plurality of water blocking yarns 3 filled in gaps. A plurality of reinforcing members 31 are embedded in the outer sheath 30. In other embodiments, the structure of the optical cable 100 may also include one or more structures similar to the described water blocking tape 40, reinforcing layer 50, or rip cord 41.

### Sixth embodiment

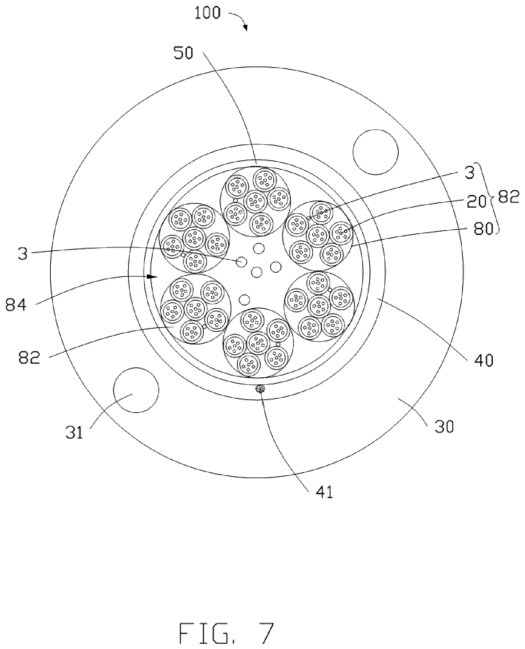

An all-dry type micro beam optical cable 100, number of optical fiber cores is 432, and structure of the optical cable is generally as shown in FIG. 7.
(1) Each micro tube 20 includes 12 optical fibers 2. The colors of the optical fibers 2 are blue, orange, green, brown, gray, white, red, black, yellow, purple, pink and cyan. Type of the optical fibers is G.657A2 optical fiber, and the diameter of optical fiber coating after coloring is 250 µm±10µm. The optical fiber 2 is twisted in SZ shape in the micro tube 20.
(2) Each micro tube 20 includes a 600D water blocking yarn 3 with a density of 15000m / kg, tensile strength of ≥ 20n, elongation at break of ≥ 12%, thermal shrinkage of ≤ 3.5%, expansion speed rate of ≥ 30ml / g / min, expansion rate of ≥ 40ml / g, and water content of ≤ 8%.
(3) The thickness of microtubule sheath 1 is generally between 0.1-0.2mm. Material of the microtubule sheath 1 includes LSZH material, the density is substantially 1.4 ~ 1.5 g/cm³, the tensile strength is substantially 12MPa, and the elongation at breakpoint is 140%.
(4) The outer diameter of the 12-cores micro tube 20 is substantially 1.5 ± 0.1 mm, the equivalent circumference diameter of optical fiber accounts for 70-80% of the inner diameter of microtubule sheath, the inner diameter of the micro tube is 1.1 ~ 1.3mm, and the equivalent diameter of water blocking yarns in the micro tube is about 0.35mm, accounting for about 7% ~ 10% of the size of inner cavity.
(5) The micro tubes 20 are twisted in SZ shape in the inner cavity of the outer sheath 30.
(6) The colors of the micro tubes 20 are blue, orange, green, brown, gray, white, red, black, yellow, purple, pink, cyan, blue with one black ring, orange with one black ring, green with one black ring, brown with one black ring, gray with one black ring, white with one black ring, red with one black ring, black with a white ring, yellow with one black ring, purple with one black ring, pink with one black ring, cyan with one black ring, blue with two black rings, orange with two black rings, green with two black rings, brown with two black rings, gray with two black rings, white with two black rings, red with two black rings, black with two white rings, yellow with two black rings, purple with two black rings, pink with two black rings, cyan with two black rings.
(7) The winding tape 80 is polyester yarn.
(8) The thickness of polyester yarn is 0.1mm, and quantity of the winding tapes 80 is three.
(9) The reinforcing layer 50 is water blocking yarn, and quantity of the water blocking yarns is twenty-six, with density of 3000 Denier.
(10) Outer diameter of twisted micro tubes is D₁=1.16 × 36^{1/2} × 1.5=10.44mm, outer diameter of twisted cable core is D= (0.1 × 3+10.44²+26 × 3000/1420 × 0.43²) ^{1/2}=10.93mm, the outer diameter of the inner cavity is 11.83mm, and the optical fiber density in the inner cavity is 3.93 F/mm². As shown in FIG. 4, the optical fiber density in the inner cavity of the traditional optical cable is 3.28 F/mm² . The structure of the sixth embodiment increases the optical fiber density by 19.8%.
(11) The water blocking tape 40 is a double-sided water blocking tape, with a thickness of 0.2mm, a width of 40mm, an expansion rate of ≥ 10mm / min, an expansion height of ≥ 12mm, a tensile strength of ≥ 40N / cm and an elongation at break of ≥ 12%, Material of the rip cord 41 may include polyester yarn, with linear density of 444tex, tensile strength of ≥ 150N, elongation at breakpoint of ≥ 12%, softening point of ≥ 238 °C, melting point of ≥ 265 °C
(12) Two FRP reinforcing members 31 are embedded in the outer sheath 30 in parallel, and the size of the stiffener is 1.8 ± 0.1mm.
(13) Material of the outer sheath 30 includes high-density polyethylene, and the thickness of the outer sheath is 2.8mm.
(14) The overall outer diameter of the 432-cores all-dry type micro beam optical cable 100 is 17.4mm.

### Seventh embodiment

An all-dry type micro beam optical cable 100, with 720 optical fiber cores.
(1) Each micro tube 20 includes 12 optical fibers 2. The colors of the optical fibers are blue, orange, green, brown, gray, white, red, black, yellow, purple, pink and cyan. Type of the optical fibers is G.657A2 optical fiber. The diameter of the optical fiber after coloring is 250µm±10µm. The optical fibers are twisted in SZ shape in the micro tube.
(2) Each microtubule includes a 600D water blocking yarn 3. The density of the water blocking yarn is 15000m / kg, tensile strength of the water blocking yarn is ≥ 20N, elongation at breakpoint of the water blocking yarn is ≥ 12%, thermal shrinkage of the water blocking yarn is ≤ 3.5%, expansion speed rate of the water blocking yarn is ≥ 30ml / g / min, expansion rate of the water blocking yarn is ≥ 40ml / g, and water content of the water blocking yarn is ≤ 8%.
(3) The thickness of microtubule sheath 1 is generally between 0.1-0.2mm. Material of the microtubule sheath 1 includes LSZH material, the density of the microtubule sheath is substantially 1.4 ~ 1.5 g/cm³, the tensile strength of the microtubule sheath is substantially 12MPa, and the elongation at break of the microtubule sheath is 140%.
(4) The outer diameter of the 12-cores micro tube 20 is substantially 1.5 ± 0.1mm, the equivalent circumference diameter of optical fiber accounts for 70-80% of the inner diameter of microtubule, the inner diameter of the micro tube is 1.1 ~ 1.3mm, and the equivalent diameter of water blocking yarn in the micro tube is about 0.35mm, accounting for about 7% ~ 10% of the inner cavity area.
(5) The micro tubes 20 are spirally twisted in SZ shape in the inner cavity of the outer sheath 30.
(6) The colors of the micro tubes 20 are blue, orange, green, brown, gray, white, red, black, yellow, purple, pink, cyan, blue with one black ring, orange with one black ring, green with one black ring, brown with one black ring, gray with one black ring, white with one black ring, red with one black ring, black with a white ring, yellow with one black ring, purple with one black ring, pink with one black ring, cyan with one black ring, blue with two black rings, orange with two black rings, green with two black rings, brown with two black rings, gray with two black rings, white with two black rings, red with two black rings, black with two white rings, yellow with two black rings, purple with two black rings, pink with two black rings, cyan with two black rings.
(7) The winding tape 80 is polyester yarn.
(8) The thickness of the polyester yarn is 0.1mm, and the number of winding tapes 80 is 5.
(9) The reinforcing layer 50 is water blocking yarn, and quantity of the water blocking yarns is forty-two, with density of 3000 Denier.
(10) Outer diameter of the twisted micro tubes is D₁=1.16 × 60^{1/2} × 1.5=13.48mm, outer diameter of the cable core is D= (0.1 × 5+13.48²+42 × 3000/1420 × 0.43²) ^{1/2}=14.09mm, the outer diameter of the inner cavity is 15.09mm, and the optical fiber density in the inner cavity is 4.03 F/mm². As shown in Figure 4, the optical fiber density in the inner cavity of the traditional optical cable is 3.59 F/mm², and the optical fiber density of the seventh embodiment is increased by 12.2%.
(11) The water blocking tape 40 is a double-sided water blocking tape, with a thickness of 0.2mm, a width of 40mm, an expansion rate of ≥ 10mm / min, an expansion height of ≥ 12mm, a tensile strength of ≥ 40N / cm, and an elongation at breakpoint of ≥ 12%.
(12) Two FRP reinforcing members 31 are embedded in the outer sheath 30 in parallel, and the diameter of the reinforcing member is 2.0 ± 0.1mm.
(13) Material of the outer sheath 30 includes high-density polyethylene, and the thickness of the outer sheath is 3.0mm.
(14) The overall outer diameter of the 720-core all-dry type micro beam optical cable 100 is 21.1mm.

### Eighth embodiment

An all-dry type micro beam optical cable 100, with 720 optical fiber cores.
(1) Each micro tube 20 includes twelve optical fibers 2. The colors of the optical fibers are blue, orange, green, brown, gray, white, red, black, yellow, purple, pink and cyan. Type of the optical fibers is G.657A2 optical fiber. The diameter of the optical fiber after coloring is 200µm+10µm. The optical fibers are twisted in SZ shape in the micro tube.
(2) Each micro tube 20 includes a 300D water blocking yarn 3. The density of the water blocking yarn is 30000m / kg, tensile strength of the water blocking yarn is ≥ 20N, elongation at breakpoint of the water blocking yarn is ≥ 12%, thermal shrinkage of the water blocking yarn is ≤ 3.5%, expansion speed rate of the water blocking yarn is ≥ 30ml / g / min, expansion rate of the water blocking yarn is ≥ 40ml / g, and water content of the water blocking yarn is ≤ 8%.
(3) The thickness of microtubule sheath 1 is generally between 0.1-0.2mm. Material of the microtubule sheath 1 includes LSZH material, density of the microtubule sheath is substantially 1.4 ~ 1.5 g/cm3, tensile strength of the microtubule sheath is substantially 12MPa, and elongation at breakpoint of the microtubule sheath is 140%.
(4) The outer diameter of the 12-cores micro tube 20 is substantially 1.3 ± 0.1mm, the equivalent circumference diameter of the optical fibers accounts for 70-80% of the inner diameter of microtubule sheath, the inner diameter of the micro tube is 0.9 ~ 1.1mm, and the equivalent diameter of the water blocking yarn in the micro tube is about 0.25mm, accounting for about 5% ~ 8% of the inner cavity area.
(5) Micro tubes 20 are spirally twisted in SZ shape in the inner cavity of the outer sheath.
(6) The colors of micro tube 20 are blue, orange, green, brown, gray, white, red, black, yellow, purple, pink, cyan, blue with one black ring, orange with one black ring, green with one black ring, brown with one black ring, gray with one black ring, white with one black ring, red with one black ring, black with a white ring, yellow with one black ring, purple with one black ring, pink with one black ring, cyan with one black ring, blue with two black rings, orange with two black rings, green with two black rings, brown with two black rings, gray with two black rings, white with two black rings, red with two black rings, black with two white rings, yellow with two black rings, purple with two black rings, pink with two black rings, cyan with two black rings.
(7) The winding tape 80 is polyester yarn.
(8) The thickness of the polyester yarn is 0.1mm, and the number of winding tapes is 5.
(9) The reinforcing layer 50 is water blocking yarn, and quantity of the water blocking yarns is thirty, with density of 3000 Denier.
(10) Outer diameter of the twisted micro tubes is D₁=1.16 × 60^{1/2} × 1.3=11.68mm, outer diameter of the twisted cable cores is D₁=1.16 × 60^{1/2} × 1.3=11.68mm, outer diameter of the inner cavity is 12.69mm, and the optical fiber density in the inner cavity is 5.69 F/mm². As shown in Figure 4, the optical fiber density in the inner cavity of the traditional optical cable is 4.56 F/ mm2, and the optical fiber density of the eighth embodiment is an increase of 24.8%.
(11) The water blocking tape 40 is a double-sided water blocking tape with a thickness of 0.2mm, a width of 40mm, an expansion rate of ≥ 10mm / min, an expansion height of ≥ 12mm, a tensile strength of ≥ 40N / cm and an elongation at break of ≥ 12%.
(12) Two FRP reinforcing members 31 are embedded in the outer sheath 30 in parallel, and the diameter of the reinforcing member is 1.8 ± 0.1mm.
(13) Material of the outer sheath 30 includes high-density polyethylene, and the thickness of the outer sheath is 2.6mm.
(14) The overall outer diameter of the 720-core all-dry type micro beam optical cable 100 is 17.9mm.

The wrapped all-dry type micro beam optical cable is free of oil, environmentally undamaging, and pollution-free. Cleaning of oil during construction is not required, for speed and better efficiency. Dry-type water blocking material has good compatibility with optical fiber, and its long-term coexistence does not affect the performance of optical fiber. The performance of dry-type water blocking material is stable with the change of temperature, so that the transmission characteristics of optical fiber do not change with the change of temperature. The dry-type water blocking material accounts for 20% or less of the size of the inner diameter of the micro tube, and has no long-term effect on the sheath performance of the micro tube. The density of optical fibers and the space ratios of optical fibers in the inner cavity of the outer sheath are improved by micro tubes being wound and combined with winding tape.

It should be noted that the above embodiments are used to illustrate aspects of the present disclosure, and are not limitations. Those skilled in the art will appreciate that the instant disclosure can be technically modified without departing from the scope of the claims.

## Claims

1. An all-dry microbeam optical cable (100), comprising:
a microtubule core (84), wherein the microtubule core (84) comprises a plurality of winding microtubules (82) and a plurality of water blocking yarns (3), the plurality of the water blocking yarns (3) are filled in gaps between the winding microtubules (82), wherein each winding microtubule (82) comprises a plurality of easy-stripping dry-type optical fiber microtubes (20) wound by a the winding tape (80) and a plurality of water blocking yarns (3) filled in gaps of the plurality of the easy-stripping dry-type optical fiber microtubes (20), wherein further each of the plurality of easy-stripping dry-type optical fiber microtubes (20) comprises:
a plurality of optical fibers (2);
a plurality of water blocking yarns (3); and
a microtubule sheath (1) wrapping up the optical fibers (2) and the water blocking yarns (3);
an equivalent circumferential diameter of the plurality of optical fibers (2) accounts for less than 90% and greater than or equal to 70% of an inner cavity of the microtubule sheath (1), and the water blocking yarn (3) accounts for 20% or less of the inner cavity of the microtubule sheath (1), a
material of the microtubule sheath (1) comprises an olefin polymer and an inorganic filler; the equivalent circumferential diameter formula of the plurality of optical fibers (2) is: D=1.16×n^{1/2}×d, wherein, n is the quantity of optical fibers (2), and d is the diameter of optical fiber (2);
an outer sheath (30); and
a plurality of reinforcing members (31) embedded in the outer sheath (30);
wherein, the outer sheath (30) wraps the microtubule core (84), a water blocking tape (40) is coaxially wrapped between the microtubule core (84) and the outer sheath (30), the water blocking tape (40) comprises a plurality of embedded rip cords (41).

2. The all-dry microbeam optical cable (100) as claimed in claim 1, **characterized in that**, the equivalent circumferential diameter of the plurality of the optical fibers (2) accounts for 70% - 80% of the inner cavity of the microtubule sheath (1).

3. The all-dry microbeam optical cable (100) as claimed in claim 1, **characterized in that**, the inorganic filler accounts for 0.1% ~ 20% of the total mass of all components of the microtubule sheath (1); the olefin polymer comprises a first olefin polymer or a copolymer of ethylene / propylene and other monomer, wherein the first olefin polymer comprises linear low density polyethylene, poly-4-methyl-1-pentene, and ethylene propylene copolymer; wherein the copolymer of ethylene / propylene and other monomer comprises one or more mixtures of ethylene alkyd ethylene copolymer, ethylene methyl acrylate copolymer, and ethylene butyl acrylate copolymer.

4. The all-dry microbeam optical cable (100)as claimed in claim 3, **characterized in that**, the inorganic filler comprises hydroxides, hydrated oxides, metal salts or mixtures thereof; or the inorganic filler comprises carbon black, silica, kaolin, clay or mixtures thereof; a thickness of the microtubule sheath (1) is 0.1-0.2mm.

5. The all-dry microbeam optical cable (100) as claimed in claim 1, **characterized in that**, the water blocking yarn (3) comprises a water absorbent fiber, the water absorbent fiber comprises acrylic acid, polyacrylic acid, acrylate or their modified substances or their mixtures.

6. The all-dry type micro beam optical cable (100) as claimed in claim 1, **characterized in that**, a reinforcing layer (50) is coaxially arranged between the microtubule core (84) and the outer sheath_(30), material of the reinforcing layer (50) comprises any one of aramid, glass fiber yarn, or polyester yarn; or comprises a combination of water blocking yarn and one or more of aramid, glass fiber yarn, or polyester yarn.

7. The all-dry type micro beam optical cable (100) as claimed in claim 1, **characterized in that**, the water blocking tape (40) is a double-sided water blocking tape.

8. The all-dry type micro beam optical cable (100) as claimed in claim 7, **characterized in that**, material of the rip cords (41) is aramid or polyester yarn.

9. The all-dry type micro beam optical cable (100) as claimed in claim 1, **characterized in that**, the plurality of the micro tubes (20) and the plurality of water blocking yarns (3) in the microtubule core (84) are twisted in SZ shape, or S shape, or spirally twisted.

10. The all-dry type micro beam optical cable (100) as claimed in claim 1, **characterized in that**, material of the outer sheath (30) is polyolefin material; the reinforcing member (31) is a glass fiber reinforced plastic rod with a density of 2.05~2.15 g/cm³.

11. The all-dry type micro bean optical cable (100) as claimed in claim 1, **characterized in that**, the winding tape comprises polyester yarn, aramid yarn, or polyester tape, or a combination thereof.

12. The all-dry type micro bean optical cable (100) as claimed in claim 1, **characterized in that**, a thickness of the winding tape (80) is 0.1-0.2 mm.

## Patentansprüche

1. Ein volltrockenes optisches Mikrostrahlkabel (100), umfassend:
einen Mikroröhrchenkern (84), wobei der Mikroröhrchenkern (84) eine Vielzahl von Wicklungsmikroröhrchen (82) und eine Vielzahl von wasserblockierenden Garnen (3) umfasst, wobei die Vielzahl der wasserblockierenden Garne (3) in Zwischenräume zwischen den Wicklungsmikroröhrchen (82) gefüllt sind, wobei jedes Wicklungsmikroröhrchen (82) eine Vielzahl von leicht abisolierbaren, trockenen optischen Faser-Mikroröhrchen (20), die von einem Wickelband (80) umwickelt sind, und eine Vielzahl von wasserblockierenden Garnen (3), die in Zwischenräume der Vielzahl der leicht abisolierbaren, trockenen optischen Faser-Mikroröhrchen (20) gefüllt sind, umfasst, wobei ferner jedes der Vielzahl von leicht abisolierbaren, trockenen optischen Faser-Mikroröhrchen (20) Folgendes umfasst:
eine Vielzahl von optischen Fasern (2);
eine Vielzahl von wasserblockierenden Garnen (3); und
einen Mikroröhrchenmantel (1), der die optischen Fasern (2) und die wasserblockierenden Garne (3) umhüllt; ein äquivalenter Umfangsdurchmesser der Vielzahl von optischen Fasern (2) macht weniger als 90 % und mehr als oder
gleich 70 % eines inneren Hohlraums des Mikroröhrchenmantels (1) aus, und das wasserblockierende Garn (3) macht 20 % oder weniger des inneren Hohlraums des Mikroröhrchenmantels (1) aus;
ein Material des Mikroröhrchenmantels (1) umfasst ein Olefinpolymer und einen anorganischen Füllstoff;
die Formel für den äquivalenten Umfangsdurchmesser der Vielzahl von optischen Fasern (2) lautet:
D=1.16 x n^{1/2} x d, wobei n die Anzahl der optischen Fasern (2) ist und d der Durchmesser der optischen Faser (2) ist;
einen Außenmantel (30); und
eine Vielzahl von Verstärkungselementen (31), die in den Außenmantel (30) eingebettet sind;
wobei der Außenmantel (30) den Mikroröhrchenkern (84) umhüllt, ein wasserblockierendes Band (40) koaxial zwischen dem Mikroröhrchenkern (84) und dem Außenmantel (30) gewickelt ist und das wasserblockierende Band (40) eine Vielzahl von eingebetteten Aufreißfäden (41) umfasst.

2. Das volltrockene optische Mikrostrahlkabel (100) nach Anspruch 1, **dadurch gekennzeichnet, dass** der äquivalente Umfangsdurchmesser der Vielzahl der optischen Fasern (2) 70 % - 80 % des inneren Hohlraums des Mikroröhrchenmantels (1) ausmacht.

3. Das volltrockene optische Mikrostrahlkabel (100) nach Anspruch 1, **dadurch gekennzeichnet, dass** der anorganische Füllstoff 0.1 % ~ 20 % der Gesamtmasse aller Komponenten des Mikroröhrchenmantels (1) ausmacht; das Olefinpolymer ein erstes Olefinpolymer oder ein Copolymer von Ethylen/Propylen und einem anderen Monomer umfasst, wobei das erste Olefinpolymer lineares Polyethylen niedriger Dichte, Poly-4-methyl-1-penten und Ethylen-Propylen-Copolymer umfasst; wobei das Copolymer von Ethylen/Propylen und einem anderen Monomer eine oder mehrere Mischungen von Ethylen-Alkyd-Ethylen-Copolymer, Ethylen-Methylacrylat-Copolymer und Ethylen-Butylacrylat-Copolymer umfasst.

4. Das volltrockene optische Mikrostrahlkabel (100) nach Anspruch 3, **dadurch gekennzeichnet, dass** der anorganische Füllstoff Hydroxide, hydratisierte Oxide, Metallsalze oder Mischungen davon umfasst; oder der anorganische Füllstoff Ruß, Siliziumdioxid, Kaolin, Ton oder Mischungen davon umfasst; eine Dicke des Mikroröhrchenmantels (1) 0.1 - 0.2 mm beträgt.

5. Das volltrockene optische Mikrostrahlkabel (100) nach Anspruch 1, **dadurch gekennzeichnet, dass** das wasserblockierende Garn (3) eine wasserabsorbierende Faser umfasst, wobei die wasserabsorbierende Faser Acrylsäure, Polyacrylsäure, Acrylat oder deren modifizierte Substanzen oder deren Mischungen umfasst.

6. Das volltrockene optische Mikrostrahlkabel (100) nach Anspruch 1, **dadurch gekennzeichnet, dass** eine Verstärkungsschicht (50) koaxial zwischen dem Mikroröhrchenkern (84) und dem Außenmantel (30) angeordnet ist, wobei das Material der Verstärkungsschicht (50) eines von Aramid, Glasfasergarn oder Polyestergarn umfasst; oder eine Kombination aus wasserblockierendem Garn und einem oder mehreren von Aramid, Glasfasergarn oder Polyestergarn umfasst.

7. Das volltrockene optische Mikrostrahlkabel (100) nach Anspruch 1, **dadurch gekennzeichnet, dass** das wasserblockierende Band (40) ein doppelseitiges wasserblockierendes Band ist.

8. Das volltrockene optische Mikrostrahlkabel (100) nach Anspruch 7, **dadurch gekennzeichnet, dass** das Material der Aufreißfäden (41) Aramid oder Polyestergarn ist.

9. Das volltrockene optische Mikrostrahlkabel (100) nach Anspruch 1, **dadurch gekennzeichnet, dass** die Vielzahl der leicht abisolierbaren, trockenen optischen Faser-Mikroröhrchen (20) und die Vielzahl der wasserblockierenden Garne (3) in dem Mikroröhrchenkern (84) SZ-förmig oder S-förmig verseilt oder spiralförmig verseilt sind.

10. Das volltrockene optische Mikrostrahlkabel (100) nach Anspruch 1, **dadurch gekennzeichnet, dass** das Material des Außenmantels (30) ein Polyolefinmaterial ist; das Verstärkungselement (31) ein glasfaserverstärkter Kunststoffstab mit einer Dichte von 2.05 ~ 2.15 g/cm³ ist.

11. Das volltrockene optische Mikrostrahlkabel (100) nach Anspruch 1, **dadurch gekennzeichnet, dass** das Wickelband Polyestergarn, Aramidgarn oder Polyesterband oder eine Kombination davon umfasst.

12. Das volltrockene optische Mikrostrahlkabel (100) nach Anspruch 1, **dadurch gekennzeichnet, dass** eine Dicke des Wickelbandes (80) 0.1 - 0.2 mm beträgt.

## Revendications

1. Un câble optique à microfaisceau à sec complet (100), comprenant:
une âme de microtubule (84), dans laquelle l'âme de microtubule (84) comprend une pluralité de microtubules d'enroulement (82) et une pluralité de fils bloquant l'eau (3), la pluralité de fils bloquant l'eau (3) remplissant les espaces entre les microtubules d'enroulement (82), dans laquelle chaque microtubule d'enroulement (82) comprend une pluralité de microtubes de fibres optiques de type sec à dénudage facile (20) enroulés par un ruban d'enroulement (80) et une pluralité de fils bloquant l'eau (3) remplissant les espaces de la pluralité de microtubes de fibres optiques de type sec à dénudage facile (20), dans laquelle, en outre, chacun de la pluralité de microtubes de fibres optiques de type sec à dénudage facile (20) comprend:
une pluralité de fibres optiques (2);
une pluralité de fils bloquant l'eau (3); et
une gaine de microtubule (1) enveloppant les fibres optiques (2) et
les fils bloquant l'eau (3); un diamètre circonférentiel équivalent de la pluralité de fibres optiques (2) représente moins de 90 % et une valeur supérieure ou égale à 70 % d'une cavité interne de la gaine de microtubule (1), et le fil bloquant l'eau (3) représente 20 % ou moins de la cavité interne de la gaine de microtubule (1),
un matériau de la gaine de microtubule (1) comprend un polymère d'oléfine et une charge inorganique;
la formule du diamètre circonférentiel équivalent de la pluralité de fibres optiques (2) est:
D=1.16 x n^{1/2} x d, dans laquelle, n est la quantité de fibres optiques (2), et d est le diamètre de la fibre optique (2);
une gaine extérieure (30); et
une pluralité d'éléments de renforcement (31) intégrés dans la gaine extérieure (30);
dans laquelle, la gaine extérieure (30) enveloppe l'âme de microtubule (84), un ruban bloquant l'eau (40) est enveloppé de manière coaxiale entre l'âme de microtubule (84) et la gaine extérieure (30), et le ruban bloquant l'eau (40) comprend une pluralité de cordons de déchirure intégrés (41).

2. Le câble optique à microfaisceau à sec complet (100) selon la revendication 1, **caractérisé en ce que** le diamètre circonférentiel équivalent de la pluralité de fibres optiques (2) représente de 70 % à 80 % de la cavité interne de la gaine de microtubule (1).

3. Le câble optique à microfaisceau à sec complet (100) selon la revendication 1, **caractérisé en ce que** la charge inorganique représente de 0.1 % à 20 % de la masse totale de tous les composants de la gaine de microtubule (1); le polymère d'oléfine comprend un premier polymère d'oléfine ou un copolymère d'éthylène/propylène et d'un autre monomère, dans lequel le premier polymère d'oléfine comprend du polyéthylène basse densité linéaire, du poly-4-méthyl-1-pentène et un copolymère d'éthylène-propylène; dans lequel le copolymère d'éthylène / propylène et d'un autre monomère comprend un ou plusieurs mélanges de copolymère éthylène-alkyde-éthylène, de copolymère éthylène-acrylate de méthyle et de copolymère éthylène-acrylate de butyle.

4. Le câble optique à microfaisceau à sec complet (100) selon la revendication 3, **caractérisé en ce que** la charge inorganique comprend des hydroxydes, des oxydes hydratés, des sels métalliques ou leurs mélanges; ou la charge inorganique comprend du noir de carbone, de la silice, du kaolin, de l'argile ou leurs mélanges; une épaisseur de la gaine de microtubule (1) est de 0.1 à 0.2 mm.

5. Le câble optique à microfaisceau à sec complet (100) selon la revendication 1, **caractérisé en ce que** le fil bloquant l'eau (3) comprend une fibre absorbant l'eau, la fibre absorbant l'eau comprenant de l'acide acrylique, de l'acide polyacrylique, de l'acrylate ou leurs substances modifiées ou leurs mélanges.

6. Le câble optique à microfaisceau à sec complet (100) selon la revendication 1, **caractérisé en ce qu'**une couche de renforcement (50) est disposée de manière coaxiale entre l'âme de microtubule (84) et la gaine extérieure (30), un matériau de la couche de renforcement (50) comprenant l'un quelconque parmi l'aramide, un fil de fibre de verre ou un fil de polyester; ou comprend une combinaison de fil bloquant l'eau et d'un ou plusieurs éléments parmi l'aramide, un fil de fibre de verre ou un fil de polyester.

7. Le câble optique à microfaisceau à sec complet (100) selon la revendication 1, **caractérisé en ce que** le ruban bloquant l'eau (40) est un ruban bloquant l'eau double face.

8. Le câble optique à microfaisceau à sec complet (100) selon la revendication 7, **caractérisé en ce qu'**un matériau des cordons de déchirure (41) est de l'aramide ou un fil de polyester.

9. Le câble optique à microfaisceau à sec complet (100) selon la revendication 1, **caractérisé en ce que** la pluralité de microtubes de fibres optiques de type sec à dénudage facile (20) et la pluralité de fils bloquant l'eau (3) dans l'âme de microtubule (84) sont torsadés en forme de SZ, ou en forme de S, ou torsadés en spirale.

10. Le câble optique à microfaisceau à sec complet (100) selon la revendication 1, **caractérisé en ce qu'**un matériau de la gaine extérieure (30) est un matériau polyoléfine; l'élément de renforcement (31) est une tige en plastique renforcé de fibres de verre avec une densité de 2.05 à 2,15 g/cm³.

11. Le câble optique à microfaisceau à sec complet (100) selon la revendication 1, **caractérisé en ce que** le ruban d'enroulement comprend un fil de polyester, un fil d'aramide ou un ruban de polyester, ou une combinaison de ceux-ci.

12. Le câble optique à microfaisceau à sec complet (100) selon la revendication 1, **caractérisé en ce qu'**une épaisseur du ruban d'enroulement (80) est de 0.1 à 0.2 mm.
